# EUROPÄISCHE PATENTSCHRIFT

(11) **EP 2 868 929 B1**
(45) Veröffentlichungstag und Bekanntmachung des Hinweises auf die Patenterteilung: **09.05.2018**
(21) Anmeldenummer: 14182666.9
(22) Anmeldetag: 28.08.2014
(51) Int. Cl.: F04D 19/04, F04D 29/60

(54) **Vakuumpumpe**
Vacuum pump
Pompe à vide

(30) Priorität: 31.10.2013 DE 102013222167
(43) Veröffentlichungstag der Anmeldung: 06.05.2015
(73) Patentinhaber: PFEIFFER VACUUM GMBH, 35614 Asslar (DE)
(72) Erfinder: Hofmann, Bernd, 35578 Wetzlar (DE)
(74) Vertreter: Manitz Finsterwald Patentanwälte PartmbB

(56) Entgegenhaltungen:
- EP-A2- 2 228 540
- DE-A1-102005 020 904
- US-A- 979 481
- US-A- 1 799 855
- US-A1- 2003 175 113
- US-A1- 2008 309 071

## Beschreibung

Die Erfindung betrifft eine Aufnahmevorrichtung zur teilweisen Aufnahme eines Flansches einer Vakuumpumpe. Ferner betrifft die Erfindung eine Vakuumpumpe sowie ein System aus einer Aufnahmevorrichtung und einer Vakuumpumpe.

Es ist grundsätzlich bekannt, den Flansch der Vakuumpumpe mit Hilfe von Schrauben an einem Rezipienten, beispielsweise einem zu evakuierenden Behältnis, zu befestigen. Oftmals ist der Raum, in dem der Rezipient angeordnet ist, jedoch beschränkt und eingeengt. Eine Befestigung des Flansches ist folglich, wenn überhaupt, nur schwer möglich.

EP 2 228 540 A2 offenbart eine Aufnahmevorrichtung gemäß dem Oberbegriff des Anspruchs 1. Weiterer Stand der Technik ist aus DE 10 2005 020 904 A1, US 2003/0175113 A1, US 2008/0309071 A1 und US 1 799 855 A bekannt.

Es ist eine Aufgabe der Erfindung, die Montage und Demontage einer Vakuumpumpe an einem Rezipienten, insbesondere an schwer zugänglichen Orten, zu erleichtern.

Die Aufgabe wird jeweils gelöst durch die Vorrichtungen mit den Merkmalen der unabhängigen Ansprüche.

Der Flansch, welcher zumindest teilweise in der Aufnahmevorrichtung aufgenommen werden kann, kann unmittelbar mit einer Vakuumpumpe verbunden sein. Der Flansch und die Vakuumpumpe können vorzugsweise einstückig ausgebildet sein.

Alternativ ist es auch möglich, dass der Flansch nur mittelbar mit der Vakuumpumpe verbindbar ist und z.B. einen Teil eines Adapters bildet. So kann die Vakuumpumpe beispielsweise einen Standardflansch, insbesondere einen so genannten ISO-F Flansch, aufweisen, welcher mit dem Adapter verbunden werden kann, insbesondere durch Befestigungsmittel wie z.B. Schrauben. Der Adapter kann hierbei einen Standardflansch, insbesondere einen ISO-F Flansch, zur Befestigung am Standardflansch der Vakuumpumpe sowie den Flansch zur Aufnahme in der Aufnahmevorrichtung umfassen. Auf diese Weise können auch herkömmliche Vakuumpumpen, welche einen Standardflansch aufweisen, nachgerüstet und in der erfindungsgemäßen Aufnahmevorrichtung aufgenommen werden.

Die Aufnahmevorrichtung umfasst erfindungsgemäß zumindest einen Befestigungsabschnitt zur Befestigung an einem Rezipienten. Bei dem Rezipienten kann es sich beispielsweise um ein Behältnis handeln, welches evakuiert werden soll. Der Rezipient kann hierbei einen Standardflansch, insbesondere einen ISO-F Flansch, umfassen. Auf diese Weise können auch herkömmliche Rezipienten eingesetzt werden.

Die Aufnahmevorrichtung umfasst ferner einen Auflageabschnitt, auf welchem der Flansch in einem Montagezustand aufliegt. Der Montagezustand bezeichnet den Zustand, in dem die Vakuumpumpe mit dem Rezipienten fest verbunden oder zumindest derart relativ zu dem Rezipienten positioniert ist, und zwar mit Hilfe der erfindungsgemäßen Aufnahmevorrichtung, dass die Vakuumpumpe an dem Rezipienten befestigt werden kann.

Es ist ferner zumindest eine Aufnahmeöffnung vorgesehen, welche von dem Auflageabschnitt begrenzt wird. Die Aufnahmeöffnung kann hierbei allseitig umschlossen sein oder aber zumindest eine offene Seite aufweisen.

Erfindungsgemäß ist der Flansch bei am Rezipienten befestigter Aufnahmevorrichtung von einer Zugangsseite der Aufnahmevorrichtung aus in die Aufnahmeöffnung einschiebbar und aus der Aufnahmeöffnung herausziehbar.

Die Erfindung ermöglicht es also, zunächst die Aufnahmevorrichtung am Rezipienten zu montieren. Anschließend kann der Flansch in die Aufnahmeöffnung eingeschoben und daraufhin am Rezipienten bzw. an einem Flansch desselben befestigt werden. Zum Entnehmen wird zunächst der Flansch aus der Aufnahmeöffnung herausgezogen. Anschließend kann erforderlichenfalls die Aufnahmevorrichtung vom Rezipienten demontiert und abgenommen werden.

Erfindungsgemäß kann auf diese Weise ein Flansch einer Vakuumpumpe auch an schwer zugänglichen Orten an einem Rezipienten befestigt und wieder entfernt werden. Insbesondere ist eine Montage bzw. Demontage aus nur einer Zugangsrichtung möglich.

Auf diese Weise wird durch die Erfindung die Montage und Demontage einer Vakuumpumpe an einem Rezipienten erleichtert.

Weiterbildungen der Erfindung sind auch den abhängigen Ansprüchen, der Beschreibung sowie den beigefügten Zeichnungen zu entnehmen.

Gemäß einer Ausführungsform ist der Auflageabschnitt an einer im Montagezustand dem Rezipienten zugewandten Oberseite der Aufnahmevorrichtung gegenüber dem Befestigungsabschnitt zurückversetzt. Die Oberseite des Befestigungsabschnitts ist somit insbesondere höher gelegen als die Oberseite des Auflageabschnitts. Auf diese Weise wird insbesondere die Aufnahmeöffnung gebildet, welche beispielsweise als eine Art Schlitz oder Spalt ausgebildet sein kann.

Nach einer weiteren Ausführungsform steht der Befestigungsabschnitt an der Zugangsseite der Aufnahmevorrichtung über den Auflageabschnitt hinaus vor. Der Auflageabschnitt kann insbesondere bezüglich der Zugangsseite zumindest teilweise zurückversetzt sein. Es ist auch möglich, dass der Auflageabschnitt an die Gehäuseform der Vakuumpumpe angepasst und beispielsweise mit einer konkaven Ausbuchtung zur Aufnahme eines zylindrischen Pumpengehäuses versehen ist.

Insbesondere können die Aufnahmevorrichtung und der Flansch derart geformt sein, dass sich im Montagezustand insgesamt ein Standardflansch ergibt. Die von dem Umriss der im Montagezustand aus Flansch und Aufnahmevorrichtung zusammengesetzten Anordnung begrenzte Fläche ist somit nicht größer als die eines Standardflansches und vorzugsweise mit einem herkömmlichen Flansch identisch.

Erfindungsgemäß sind zwei Befestigungsabschnitte und ein sich zwischen den Befestigungsabschnitten erstreckender, den Auflageabschnitt bildender Träger vorgesehen. Der Träger kann insbesondere als Schiene ausgebildet sein. Auch kann der Träger eine Auflagefläche bilden, auf welcher der Flansch im Montagezustand mit seiner Unterseite aufliegt.
Zumindest Teile der Befestigungsabschnitte sowie des Trägers können als ein gemeinsames, einstückiges Bauteil ausgebildet sein. Erfindungsgemäß ist die Aufnahmevorrichtung zumindest im Wesentlichen U-förmig ausgebildet, wobei die Befestigungsabschnitte die durch den Träger verbundenen U-Schenkel bilden.
Nach einer bevorzugten Ausführungsform ist die Länge jedes U-Schenkels kleiner als die Länge des Trägers.
Insbesondere kann jeder Befestigungsabschnitt zumindest ein, vorzugsweise genau ein, Befestigungsmittel und/oder eine Öffnung zur Aufnahme zumindest eines Befestigungsmittels umfassen. Bei dem Befestigungsmittel kann es sich beispielsweise um eine Schraube oder einen Bolzen handeln.

Alternativ oder zusätzlich ist es auch möglich, am Träger, insbesondere zwischen den Befestigungsabschnitten, zumindest ein, vorzugsweise genau ein, Befestigungsmittel und/oder eine Öffnung zur Aufnahme zumindest eines Befestigungsmittels, z.B. einer Schraube oder eines Bolzens, vorzusehen.

Gemäß einer weiteren Ausführungsform bilden die Befestigungsabschnitte eine sich in Richtung der Aufnahmeöffnung, insbesondere trichter-, kelch- oder trompetenförmig, verjüngende, in die Aufnahmeöffnung mündende Einführöffnung. Ein Flansch kann auf diese Weise während des Einschiebens auf den Auflageabschnitt von den Befestigungsabschnitten geführt werden. Somit wird auf einfache Weise eine exakte und sichere Positionierung des Flansches auf der Aufnahmevorrichtung ermöglicht.

Die Erfindung betrifft zudem eine Vakuumpumpe, insbesondere Turbopumpe, mit einem Flansch, der zur Aufnahme in einer erfindungsgemäßen Aufnahmevorrichtung ausgebildet ist. Eine derartige Vakuumpumpe kann insbesondere auch bei beengten Platzverhältnisses und eingeschränkten Zugangsmöglichkeiten auf einfache Weise an einem Rezipienten befestigt werden.

Gemäß einer Ausführungsform weist der Flansch der Vakuumpumpe eine erste Befestigungsseite für die Aufnahmevorrichtung und eine der ersten Befestigungsseite gegenüberliegende, von der ersten Befestigungsseite verschiedene zweite Befestigungsseite auf. Letztere ist zur direkten Befestigung am Rezipienten, insbesondere mittels separater Befestigungsmittel, bevorzugt Schrauben, Bolzen oder dergleichen, ausgebildet. Der Flansch kann somit zunächst auf den Auflageabschnitt der Aufnahmevorrichtung aufgeschoben werden. Durch ein anschließendes Verkippen kann die Vakuumpumpe in eine Position gebracht werden, in welcher der Flansch des Rezipienten und der Flansch der Vakuumpumpe parallel zueinander orientiert sind. Nun kann die zweite Befestigungsseite mithilfe der separaten Befestigungsmittel am Flansch befestigt werden. Auf diese Weise wird der Flansch der Vakuumpumpe in seine Endposition gebracht. In dieser Endposition wird eine Abdichtung zwischen der Vakuumpumpe und dem Rezipienten gewährleistet.

Erfindungsgemäß weist der Flansch zumindest eine in die Aufnahmeöffnung der Aufnahmevorrichtung einschiebbare Zunge auf. Bevorzugt ist die Breite der Zunge größer als ein Drittel, die Hälfte oder zwei Drittel der Breite des Flansches. Die Zunge ist somit groß genug, um stabil auf dem Auflageabschnitt aufliegen zu können. Alternativ kann eine Mehrzahl schmalerer, voneinander beabstandeter Zungen vorgesehen sein, mit denen die Vakuumpumpe auf dem Auflageabschnitt aufliegt.

Nach einer weiteren Ausführungsform weist der Flansch an zumindest einem Eckbereich einen, insbesondere konkav geformten oder abgeschrägten, Anschlagabschnitt für den Befestigungsabschnitt auf. Wird der Flansch auf den Träger aufgeschoben, so schlägt der Anschlagabschnitt bei Erreichen einer bestimmten Einschiebbtiefe am Befestigungsabschnitt an. Die Endposition des Flansches kann somit auf einfache Weise festgelegt werden. Auch gegebenenfalls vorgesehene separate Befestigungsmittel einer gegenüberliegenden Befestigungsseite des Flansches befinden sich nun automatisch an der richtigen Position unterhalb des Rezipienten.

Schließlich betrifft die Erfindung auch ein System aus einer erfindungsgemäßen Aufnahmevorrichtung und einer erfindungsgemäßen Vakuumpumpe.

Gemäß einer Ausführungsform schließt im Montagezustand der Flansch an einer dem Rezipienten zugewandten Oberseite zumindest im Wesentlichen bündig mit dem Befestigungsabschnitt ab. Dadurch lässt sich insbesondere auf einfache Weise eine vakuumdichte Verbindung zwischen der Vakuumpumpe und dem Rezipienten sicherstellen.

Nach einer weiteren Ausführungsform ist zumindest ein Anschlagabschnitt des Flansches, der an den in die Aufnahmeöffnung einschiebbaren Teil des Flansches anschließt, als mit dem Befestigungsabschnitt zusammenwirkender, die Einschiebtiefe begrenzender Endanschlag ausgebildet. Eine exakte Positionierung des Flansches wird dadurch gewissermaßen automatisch ermöglicht.

Gemäß einer weiteren Ausführungsform ist der Flansch zumindest im Wesentlichen komplementär zu der Aufnahmeöffnung und zu einer von zwei Befestigungsabschnitten gebildeten Einführöffnung geformt. Der Flansch, insbesondere eine Zunge des Flansches, kann somit passgenau in die Aufnahmeöffnung eingeführt werden, so dass die Vakuumpumpe auf einfache und zuverlässige Weise in die korrekte Montagestellung relativ zu dem Rezipienten gebracht werden kann.

Die Erfindung wird im Folgenden beispielhaft unter Bezugnahme auf die Zeichnungen beschrieben. Es zeigen:
- Fig. 1: eine Ausführungsform eines Systems aus einer erfindungsgemäßen Aufnahmevorrichtung und einer erfindungsgemäßen Vakuumpumpe,
- Fig. 2a: eine Draufsicht auf die Aufnahmevorrichtung gemäß Fig. 1,
- Fig. 2b: eine Vorderansicht der Aufnahmevorrichtung gemäß Fig. 1,
- Fig. 3a: eine Draufsicht auf eine weitere Ausführungsform einer erfindungsgemäßen Aufnahmevorrichtung,
- Fig. 3b: eine Vorderansicht der Aufnahmevorrichtung gemäß Fig. 3a, und
- Fig. 4: eine weitere Ausführungsform eines Systems aus einer erfindungsgemäßen Aufnahmevorrichtung und einer erfindungsgemäßen Vakuumpumpe.

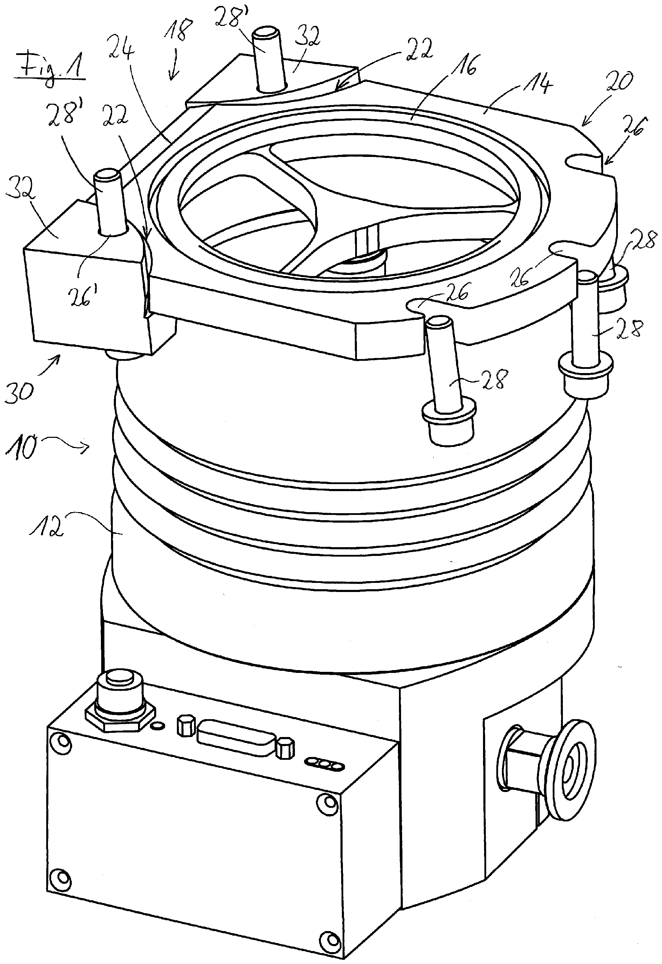

In Fig. 1 ist eine erfindungsgemäße Vakuumpumpe 10 dargestellt. Diese umfasst einen Pumpenkörper 12 und einen Flansch 14. Der Flansch 14 kann an einem nicht gezeigten Rezipienten befestigt werden. Mithilfe eines O-Rings 16 können der Flansch 14 und ein Flansch des Rezipienten vakuumdicht gegeneinander abgedichtet werden.

Der Flansch 14 weist eine erste Befestigungsseite 18 und eine zweite Befestigungsseite 20 auf. Die erste Befestigungsseite 18 umfasst zwei konkav geformte Eckbereiche 22 sowie eine Zunge 24. Die zweite Befestigungsseite 20 weist Aussparungen 26 für als Schrauben 28 ausgebildete Befestigungsmittel auf.

Der Flansch 14 ist teilweise auf eine erfindungsgemäße Aufnahmevorrichtung 30 aufgeschoben. Die Aufnahmevorrichtung 30 umfasst zwei Befestigungsabschnitte 32 sowie einen als Träger 34 ausgebildeten Auflageabschnitt.

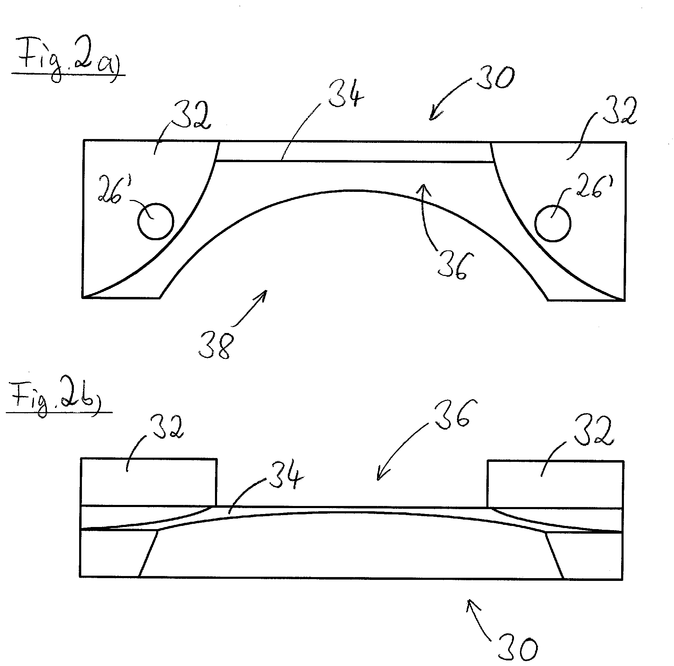

Eine Draufsicht sowie eine Vorderansicht der Aufnahmevorrichtung 30 sind in den Fig. 2a und 2b dargestellt.

Der Träger 34 erstreckt sich zwischen den Befestigungsabschnitten 32 und ist mit einer konkaven Ausnehmung versehen, die derart geformt ist, dass der Träger 34 hierdurch an die zylindrische Form des Pumpenkörpers 12 der Vakuumpumpe 10 angepasst ist. Außerdem ist der Träger 34 ausgehend von einem hinteren Bereich in Richtung der konkaven Ausnehmung leicht nach unten abgeschrägt, um das Einführen der Zunge 24 des Flansches 14 zu erleichtern.

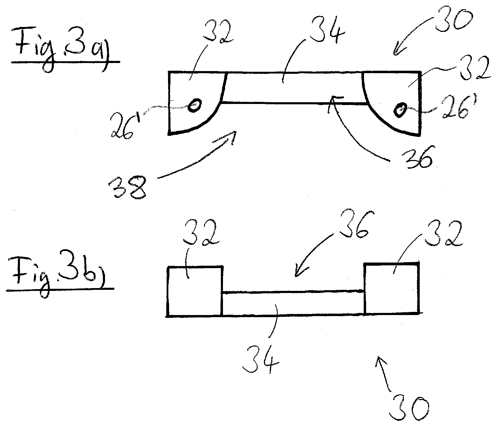

Eine alternative Ausführungsform einer Aufnahmevorrichtung 30 ist in den Fig. 3a und 3b dargestellt. Der Träger 34 ist hierbei gerade ausgebildet und weist weder eine konkave Ausnehmung noch eine Abschrägung auf.

In beiden Ausführungsformen stehen jeweils die Befestigungsabschnitte 32 über den Träger 34 vor und bilden die Schenkel eines U. In jedem Befestigungsabschnitt 32 ist eine Aussparung 26' für eine Schraube 28' vorgesehen.

Die Befestigungsabschnitte 32 definieren zusammen mit dem Träger 34 eine Aufnahmeöffnung 36 für die Zunge 24 des Flansches 14.

Um das Einführen der Zunge 24 in die Aufnahmeöffnung 36 zu vereinfachen, sind die Befestigungsabschnitte 32 derart abgerundet, dass sie eine sich in Richtung der Aufnahmeöffnung 36 verjüngende Einführöffnung 38 bilden.

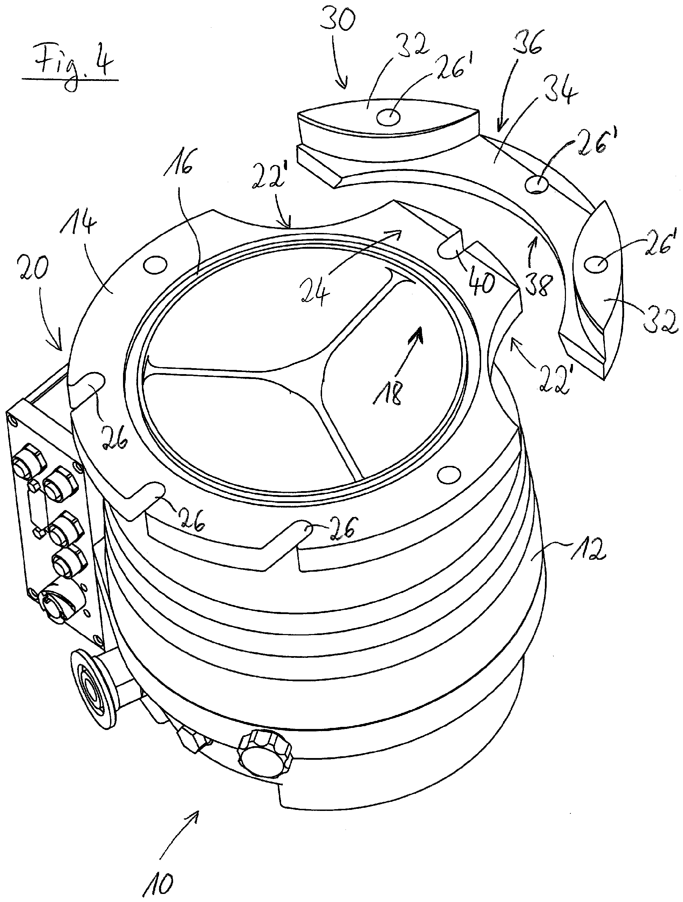

Eine weitere Ausführungsform einer erfindungsgemäßen Vakuumpumpe 10 samt Aufnahmevorrichtung 30 ist in Fig. 4 dargestellt. Der Aufnahmevorrichtung 30 ist bogen- oder bumerangförmig ausgebildet. Insbesondere ist der Träger 34 an beiden Seiten gebogen, sodass die auf dem Träger 34 angeordneten Befestigungsabschnitte 32 den Flansch 14, der - im Vergleich zu einem Standard-Flansch - durch Materialwegnahme in Form von konkaven Aussparungen 22' unterbrochen ist, im Montagezustand wieder zu einem vollständigen Flansch ergänzen. Mit anderen Worten entsteht der ursprüngliche Standardflansch der Vakuumpumpe wie bei einem Puzzle durch Zusammensetzen von Pumpe und Aufnahmevorrichtung, d.h. durch Einschieben der Zunge 24 des Flansches 14 zwischen die Befestigungsabschnitte 32 und Einfügen der Befestigungsabschnitte 32 in die Aussparungen 22' des Flansches 14.

Die hiermit verbundene Minimierung der Befestigungsfläche, d.h. die Beibehaltung des Umrisses eines Standardflansches, ist erfindungsgemäß nicht nur bei dem hier gezeigten Flansch 14 mit kreisförmigem Umriss, sondern auch bei anders geformten Flanschen realisierbar, die z.B. gerade Seitenabschnitte aufweisen oder oval, elliptisch oder unregelmäßig geformt sind.

Der Träger 34 umfasst eine weitere Aussparung 26', um die Aufnahmevorrichtung 30 zusätzlich am Rezipienten zu sichern. Um die Zunge 24 in die Aufnahmeöffnung 36 schieben zu können, wenn sich eine Schraube 28' in dieser Aussparung 26' des Trägers 34 befindet, weist die Zunge 24 eine Zungenaussparung 40 auf.

Zum Verbinden der Vakuumpumpe 10 mit einem Rezipienten wird zunächst die Aufnahmevorrichtung 30 mithilfe der Befestigungsabschnitte 32 am Rezipienten bzw. einem Flansch desselben montiert. Hierzu wird die Aufnahmevorrichtung 30 mit Schrauben 28', welche durch die Aussparungen 26' geführt werden, mit dem Rezipienten verschraubt. Gegebenenfalls wird die Aufnahmevorrichtung 30 zusätzlich über eine Aussparung 26' des Trägers 34 verschraubt.

Anschließend wird die Vakuumpumpe 10 mit der Zunge 24 ihres Flansches 14 in die Aufnahmeöffnung 36, d.h. auf den Träger 34, geschoben, sodass der Flansch 14 mit der Zunge 24 auf dem Träger 34 aufliegt. Die abgerundete Form der Befestigungsabschnitte 32 erleichtert hierbei das Aufschieben, da die Zunge 24 geführt wird.

Die Eckbereiche 22 des Flansches 14 stoßen an die entsprechend geformten Befestigungsabschnitte 32 an, sobald sich der Flansch 14 in der richtigen Position relativ zum Rezipienten befindet. Ein weitergehendes Einschieben des Flansches 14 in die Aufnahmeöffnung 36 ist durch diesen Endanschlag unterbunden. Die Vakuumpumpe 10 wird nun nach oben gekippt, sodass der Flansch 14 der Vakuumpumpe 10 und der Flansch des Rezipienten plan aufeinander liegen, wobei aufgrund der Positionierung des Flansches 14 durch die Aufnahmevorrichtung 18 die an der gegenüberliegenden Seite ausgebildeten Aussparungen 28 im Flansch 14 exakt mit entsprechenden Öffnungen im Rezipienten-Flansch ausgerichtet sind. Die Schrauben 28, welche durch die Aussparungen 26 geführt werden, werden anschließend mit dem Flansch des Rezipienten verschraubt, womit die Befestigung der Vakuumpumpe 10 an dem Rezipienten abgeschlossen ist.

Durch den O-Ring 16 sind die Vakuumpumpe 10 und der Rezipient gegeneinander abgedichtet.

Zur Demontage der Vakuumpumpe 10 werden zunächst die Schrauben 28 gelöst. Anschließend kann der Flansch 14 aus der Aufnahmeöffnung 36 herausgezogen werden. Bei entnommener Vakuumpumpe 10 kann nun erforderlichenfalls die Aufnahmevorrichtung 30 demontiert werden, indem die Schrauben 28' herausgeschraubt werden.

Erfindungsgemäß können Vakuumpumpen auf einfache Weise auch in schwer zugänglichen Bereichen montiert und demontiert werden, da hierzu insbesondere eine einzige Zugangsseite ausreicht.

### Bezugszeichenliste

- 10: Vakuumpumpe
- 12: Pumpenkörper
- 14: Flansch
- 16: O-Ring
- 18: erste Befestigungsseite
- 20: zweite Befestigungsseite
- 22: Eckbereich
- 22': Aussparung
- 24: Zunge
- 26, 26': Aussparung
- 28, 28': Schraube, Befestigungsmittel
- 30: Aufnahmevorrichtung
- 32: Befestigungsabschnitt
- 34: Träger, Auflageabschnitt
- 36: Aufnahmeöffnung
- 38: Einführöffnung
- 40: Zungenaussparung

## Patentansprüche

1. Aufnahmevorrichtung (30) zur teilweisen Aufnahme eines Flansches (14), welcher mit einer Vakuumpumpe (10) verbunden oder verbindbar ist, mit zumindest einem Befestigungsabschnitt (32) zur Befestigung an einem Rezipienten,
wenigstens einem Auflageabschnitt (34), auf welchem der Flansch (14) in einem Montagezustand aufliegt, und
zumindest einer von dem Auflageabschnitt (34) begrenzten Aufnahmeöffnung (36), wobei der Flansch (14) bei am Rezipienten befestigter Aufnahmevorrichtung (30) von einer Zugangsseite der Aufnahmevorrichtung (30) aus in die Aufnahmeöffnung (36) einschiebbar und aus der Aufnahmeöffnung (36) herausziehbar ist, und zwei Befestigungsabschnitte (32) und ein sich zwischen den Befestigungsabschnitten (32) erstreckender, den Auflageabschnitt bildender Träger (34) vorgesehen sind, **dadurch gekennzeichnet, dass** die zwei Befestigungsabschnitte (32) über den Träger (34) vorstehen und die Schenkel eines U bilden.

2. Aufnahmevorrichtung (30) nach Anspruch 1,
**dadurch gekennzeichnet, dass**
der Auflageabschnitt (34) an einer im Montagezustand dem Rezipienten zugewandten Oberseite der Aufnahmevorrichtung (30) gegenüber dem Befestigungsabschnitt (32) zurückversetzt ist.

3. Aufnahmevorrichtung (30) nach Anspruch 1 oder 2,
**dadurch gekennzeichnet, dass**
der Befestigungsabschnitt (32) an der Zugangsseite der Aufnahmevorrichtung (30) über den Auflageabschnitt (34) hinaus vorsteht.

4. Aufnahmevorrichtung (30) nach Anspruch 1,
**dadurch gekennzeichnet, dass** die Länge jedes U-Schenkels kleiner ist als die Länge des Trägers (34).

5. Aufnahmevorrichtung (30) nach einem der vorhergehenden Ansprüche,
**dadurch gekennzeichnet, dass**
die Befestigungsabschnitte (32) eine sich in Richtung der Aufnahmeöffnung (36), insbesondere trichter-, kelch- oder trompetenförmig, verjüngende, in die Aufnahmeöffnung (36) mündende Einführöffnung (38) bilden.

6. Vakuumpumpe (10), insbesondere Turbopumpe, mit einem Flansch (14), der zur Aufnahme in einer Aufnahmevorrichtung (30) nach einem der vorhergehenden Ansprüche ausgebildet ist,
**dadurch gekennzeichnet, dass**
der Flansch (14) zumindest eine in die Aufnahmeöffnung (36) der Aufnahmevorrichtung (30) einschiebbare Zunge (24) aufweist, wobei insbesondere die Breite der Zunge (24) größer als ein Drittel, die Hälfte oder zwei Drittel der Breite des Flansches (14) ist.

7. Vakuumpumpe (10) nach Anspruch 6,
**dadurch gekennzeichnet, dass**
der Flansch (14) der Vakuumpumpe (10) eine erste Befestigungsseite (18) für die Aufnahmevorrichtung (30) und eine der ersten Befestigungsseite (18) gegenüberliegende, von der ersten Befestigungsseite (18) verschiedene zweite Befestigungsseite (20) aufweist, die zur direkten Befestigung am Rezipienten, insbesondere mittels separater Befestigungsmittel (28), bevorzugt Schrauben, ausgebildet ist..

8. Vakuumpumpe (10) nach Anspruch 6 oder 7,
**dadurch gekennzeichnet, dass**
der Flansch (14) an zumindest einem Eckbereich (22) einen, insbesondere konkav geformten, Anschlagabschnitt für den Befestigungsabschnitt (32) aufweist.

9. System aus einer Aufnahmevorrichtung (30) nach einem der Ansprüche 1 bis 5 und einer Vakuumpumpe (10) nach einem der Ansprüche 6 bis 8.

10. System nach Anspruch 9,
**dadurch gekennzeichnet, dass**
im Montagezustand der Flansch (14) an einer dem Rezipienten zugewandten Oberseite zumindest im Wesentlichen bündig mit dem Befestigungsabschnitt (32) abschließt.

11. System nach Anspruch 9 oder 10,
**dadurch gekennzeichnet, dass**
zumindest ein Anschlagabschnitt des Flansches (14), der an den in die Aufnahmeöffnung (36) einschiebbaren Teil des Flansches (14) anschließt, als mit dem Befestigungabschnitt (32) zusammenwirkender, die Einschiebtiefe begrenzender Endanschlag ausgebildet ist.

12. System nach einem der Ansprüche 9 bis 11,
**dadurch gekennzeichnet, dass**
der Flansch (14) zumindest im Wesentlichen komplementär zu der Aufnahmeöffnung (36) und zu einer von den zwei Befestigungsabschnitten (32) gebildeten Einführöffnung (38) geformt ist.

13. System nach einem der Ansprüche 9 bis 12,
**dadurch gekennzeichnet, dass**
im Montagezustand der Flansch (14) der Vakuumpumpe (10) und die Befestigungsabschnitte (32) der Aufnahmevorrichtung (30) gemeinsam zumindest näherungsweise den Umriss eines Standardflansches der Vakuumpumpe (10) bilden, wobei bevorzugt eine Zunge (24) des Flansches (14) zwischen zwei insbesondere konkav geformten Materialwegnahmebereichen des Flansches (14) gelegen ist, die jeweils im Montagezustand von einem Befestigungsabschnitt (32) ausgefüllt sind.

## Claims

1. A receiving apparatus (30) for the partial reception of a flange (14) which is or can be connected to a vacuum pump (10), comprising
at least one fastening section (32) for fastening to a recipient;
at least one support section (34) on which the flange (14) lies in an assembly state; and
at least one receiving opening (36) bounded by the support section (34), wherein the flange (14) can be pushed into the receiving opening (36) and can be pulled out of the receiving opening (36) from an access side of the receiving apparatus (30) with the receiving apparatus (30) fastened to the recipient,
and
two fastening sections (32) and a carrier (34), which extends between the fastening sections (32) and forms the support section, are provided, **characterized in that** the two fastening sections (32) project beyond the carrier (34) and form the limbs of a U.

2. A receiving apparatus (30) in accordance with claim 1,
**characterized in that**
the support section (34) is set back with respect to the fastening section (32) at an upper side of the receiving apparatus (30) facing the recipient in the assembly state.

3. A receiving apparatus (30) in accordance with claim 1 or claim 2,
**characterized in that**
the fastening section (32) projects beyond the support section (34) at the access side of the receiving apparatus (30).

4. A receiving apparatus (30) in accordance with claim 1,
**characterized in that**
the length of each U limb is smaller than the length of the carrier (34).

5. A receiving apparatus (30) in accordance with any one of the preceding claims,
**characterized in that**
the fastening sections (32) form an introduction opening (38) tapering in the direction of the receiving opening (36), in particular tapering in a funnel shape, a cup shape or a trumpet shape, and opening into the receiving opening (36).

6. A vacuum pump (10), in particular a turbo pump, comprising a flange (14) which is configured in accordance with any one of the preceding claims for being received in a receiving apparatus (30),
**characterized in that**
the flange (14) has at least one tongue (24) which can be pushed into the receiving opening (36) of the receiving apparatus (30), with the width of the tongue (24) in particular being larger than a third, a half or two-thirds of the width of the flange (14).

7. A vacuum pump (10) in accordance with claim 6,
**characterized in that**
the flange (14) of the vacuum pump (10) has a first fastening side (18) for the receiving apparatus (30) and a second fastening side (20) disposed opposite the first fastening side (18) and differing from the first fastening side (18), said second fastening side being configured for the direct fastening to the recipient, in particular by means of separate fastening means (28), preferably screws.

8. A vacuum pump (10) in accordance with claim 6 or claim 7,
**characterized in that**
the flange (14) has an abutment section for the fastening section (32) at at least one corner region (22) which is in particular of concave shape.

9. A system comprising a receiving apparatus (30) in accordance with any one of the claims 1 to 5; and a vacuum pump (10) in accordance with any one of the claims 6 to 8.

10. A system in accordance with claim 9,
**characterized in that**
the flange (14) ends at least substantially flush with the fastening section (32) at an upper side facing the recipient in the assembly state.

11. A system in accordance with claim 9 or claim 10,
**characterized in that**
at least one abutment section of the flange (14) which adjoins the part of the flange (14) which can be pushed into the receiving opening (36) is configured as an end abutment cooperating with the fastening section (32) and bounding the push-in depth.

12. A system in accordance with any one of the claims 9 to 11,
**characterized in that**
the flange (14) is shaped at least substantially complementary to the receiving opening (36) and to an introduction opening (38) formed by the two fastening sections (32).

13. A system in accordance with any one of the claims 9 to 12,
**characterized in that**
the flange (14) of the vacuum pump (10) and the fastening sections (32) of the receiving apparatus (30) together at least approximately form the outline of a standard flange of the vacuum pump (10) in the assembly state, with a tongue (24) of the flange (14) preferably being disposed between two material removal sections of the flange (14) which are in particular concavely shaped and which are each filled by a fastening section (32) in the assembly state.

## Revendications

1. Dispositif de logement (30) pour loger partiellement une bride (14) qui est reliée ou susceptible d'être reliée à une pompe à vide (1), comportant
au moins une portion de fixation (32) pour la fixation sur un récipient,
au moins une portion d'appui (34) sur laquelle repose la bride (14) dans un état monté, et
au moins une ouverture de logement (36) délimitée par la portion d'appui (34), la bride (14) pouvant être introduite depuis un côté d'accès du dispositif de logement (30) jusque dans l'ouverture de logement (36) et pouvant être extraite hors de l'ouverture de logement (36), lorsque le dispositif de logement (30) est fixé sur le récipient,
et
dans lequel sont prévues deux portions de fixation (32) et un support (34) s'étendant entre les portions de fixation (32) et formant la portion d'appui,
**caractérisé en ce que**
les deux portions de fixation (32) dépassent au-delà du support (34) et forment les branches d'un U.

2. Dispositif de logement (30) selon la revendication 1,
**caractérisé en ce que**
sur un côté supérieur du dispositif de logement (30) qui est tourné vers le récipient dans l'état monté, la portion d'appui (34) est en retrait par rapport à la portion de fixation (32).

3. Dispositif de logement (30) selon la revendication 1 ou 2,
**caractérisé en ce que**
sur le côté d'accès du dispositif de logement (30), la portion de fixation (32) dépasse au-delà de la portion d'appui (34).

4. Dispositif de logement (30) selon la revendication 1,
**caractérisé en ce que**
la longueur de chaque branche du U est inférieure à la longueur du support (34).

5. Dispositif de logement (30) selon l'une des revendications précédentes,
**caractérisé en ce que**
les portions de fixation (32) forment une ouverture d'introduction (38) qui va en se rétrécissant en particulier en forme d'entonnoir, de calice ou de trompète en direction de l'ouverture de logement (36) et qui débouche dans l'ouverture de logement (36).

6. Pompe à vide (10), en particulier turbopompe, comportant une bride (14) qui est réalisée pour être logée dans un dispositif de logement (30) selon l'une des revendications précédentes,
**caractérisée en ce que**
la bride (14) comprend au moins une languette (24) susceptible d'être introduite dans l'ouverture de logement (36) du dispositif de logement (30), en particulier la largeur de la languette (24) étant supérieure à un tiers, à la moitié ou à deux tiers de la largeur de la bride (14).

7. Pompe à vide (10) selon la revendication 6,
**caractérisée en ce que**
la bride (14) de la pompe à vide (10) présente un premier côté de fixation (18) pour le dispositif de logement (30) et un second côté de fixation (20) opposé au premier côté de fixation (18) et différent du premier côté de fixation (18), qui est réalisé pour la fixation directe sur le récipient, en particulier à l'aide de moyens de fixation distincts (28), de préférence de vis.

8. Pompe à vide (10) selon la revendication 6 ou 7,
**caractérisée en ce que**
la bride (14) présente une portion de butée en particulier de forme concave pour la portion de fixation (32) sur au moins une zone de coin (22).

9. Système constitué d'un dispositif de logement (30) selon l'une des revendications 1 à 5 et d'une pompe à vide (10) selon l'une des revendications 6 à 8.

10. Système selon la revendication 9,
**caractérisé en ce que**
dans l'état monté, la bride (14) se termine sensiblement en affleurement avec la portion de fixation (32) sur un côté supérieur tourné vers le récipient.

11. Système selon la revendication 9 ou 10,
**caractérisé en ce que**
au moins une portion de butée de la bride (14) qui se raccorde à une partie de la bride (14) susceptible d'être introduite dans l'ouverture de logement (36) est réalisée sous la forme d'une butée d'extrémité coopérant avec la portion de fixation (32) et délimitant la profondeur d'introduction.

12. Système selon l'une des revendications 9 à 11,
**caractérisé en ce que**
la bride (14) est formée de façon au moins sensiblement complémentaire à l'ouverture de logement (36) et à une ouverture d'introduction (38) formée par les deux portions de fixation (32).

13. Système selon l'une des revendications 9 à 12,
**caractérisé en ce que**
dans l'état monté, la bride (14) de la pompe à vide (10) et les portions de fixation (32) du dispositif de logement (30) forment conjointement au moins approximativement le contour d'une bride standard de la pompe à vide (10), et de préférence une languette (24) de la bride (14) est située entre deux zones d'enlèvement de matériau de la bride (14), formées en particulier de façon concave, qui sont remplies chacune par une portion de fixation (32) dans l'état monté.
